## Europäisches Patentamt
## European Patent Office
## Office européen des brevets

(19)

(11) Veröffentlichungsnummer : **0 121 247 B1**

(12) **EUROPÄISCHE PATENTSCHRIFT**

(45) Veröffentlichungstag der Patentschrift :
11.11.87

(51) Int. Cl.⁴ : **G 06 K   5/00**

(21) Anmeldenummer : **84103499.4**

(22) Anmeldetag : **29.03.84**

(54) **Belegverarbeitungseinrichtung.**

(30) Priorität : 30.03.83 DE 3311672

(43) Veröffentlichungstag der Anmeldung :
10.10.84 Patentblatt 84/41

(45) Bekanntmachung des Hinweises auf die Patenterteilung : 11.11.87 Patentblatt 87/46

(84) Benannte Vertragsstaaten :
**AT BE CH DE FR GB IT LI LU NL SE**

(56) Entgegenhaltungen :
**DE-A- 1 499 537
DE-B- 2 737 854
DE-C-   911 959**

(73) Patentinhaber : **COMPUTER GESELLSCHAFT KONSTANZ MBH
Max-Stromeyer-Strasse 116
D-7750 Konstanz (DE)**

(72) Erfinder : **Koutoudis, Konstantin
Bismarksteig 10
D-7750 Konstanz (DE)**
Erfinder : **Fiedler, Wolfgang
St. Katharinenweg 23
D-7750 Konstanz (DE)**
Erfinder : **Schaaf, Klaus
Fürstenbergstrasse 15b
D-7750 Konstanz (DE)**

(74) Vertreter : **Mehl, Ernst, Dipl.-Ing. et al
Postfach 22 01 76
D-8000 München 22 (DE)**

## Beschreibung

Die Erfindung betrifft eine Belegverarbeitungseinrichtung nach dem Oberbegriff des Patentanspruchs 1.

Aus der DE-AS 27 37 854 ist eine Belegcodiereinrichtung bekannt, bei der in einer Dateneingabestation mit Datensichtgerät und Tastatur eine dazwischen angeordnete Belegsichtstation vorgesehen ist, in der der in senkrechter Lage transportierte Beleg angehalten wird, damit die handschriftlich oder mit Schreibmaschine eingetragenen Daten mittels der Tastatur auf den Codierstreifen des gleichen Beleges übertragen werden können. Diese Belegsichtstation weist auf der Vorderseite eine Glasscheibe auf, hinter der der in senkrechter Lage transportierte Beleg positioniert wird. Für die Bedienungsperson, die sowohl den Beleg als auch das darüber angeordnete Datensichtgerät betrachten soll, ist eine derartig abgebildete Belegsichtstation nicht optimal, weil die Bedienungsperson zwangsläufig schräg auf den Beleg sieht, wobei die Spiegelung an der Glasscheibe eine zusätzliche Sichtverschlechterung mit sich bringt.

Aus der DE-C-911 959 ist eine Briefcodiervorrichtung bekannt, die eine ergonomisch günstige, schräg nach vorne abfallende Sichtposition ermöglicht, dazu aber einen senkrecht verlaufenden Transportkanal, der schwer mit einem darüber angeordneten Datensichtgerät vereinbar ist, benötigt.

Der vorliegenden Erfindung liegt nun die Aufgabe zugrunde, eine Belegsichtstation in der Weise auszubilden, daß der gesamte Beleg in einer für die Bedienungsperson ergonomisch günstigen Position betrachtet werden kann.

Ausgehend von einer Belegverarbeitungseinrichtung der eingangs genannten Art ergibt sich die Lösung dieser Aufgabe erfindungsgemäß durch die kennzeichnenden Merkmale des Patentanspruchs 1.

Vorteilhafte Weiterbildungen der Erfindung sind in den Unteransprüchen angegebenen.

Im folgenden wird ein Ausführungsbeispiel der Erfindung anhand der Zeichnung näher erläutert. Dabei zeigen :

Fig. 1 einen Ausschnitt aus einer Belegverarbeitungseinrichtung im Bereich einer Korrekturstation in perspektivischer Darstellung,

Fig. 2 eine Seitenansicht einer innerhalb der Korrekturstation gemäß Fig. 1 vorgesehenen Belegsichtstation.

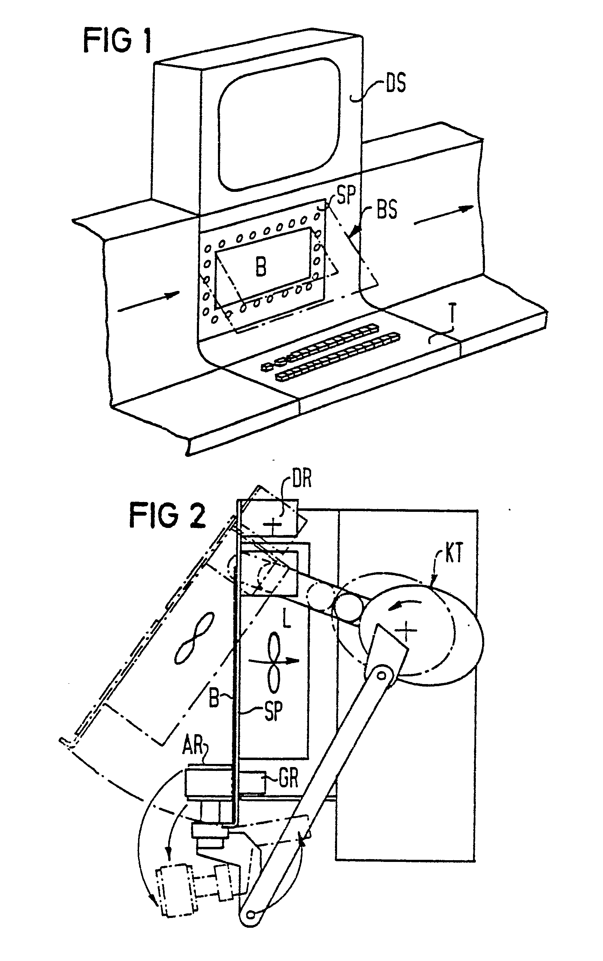

Die Fig. 1 zeigt eine Korrekturstation innerhalb einer Belegverarbeitungseinrichtung, die aus einem Datensichtgerät DS, einer Tastatur T und einer dazwischen angeordneten Belegsichtstation BS besteht. In dieser Belegsichtstation BS wird ein in der Lesestation nicht fehlerfrei gelesener Beleg angehalten, während gleichzeitig der gelesene Datensatz auf dem Bildschirm des Datensichtgerätes DS dargestellt wird. Der Beleg wird in der Belegsichtstation BS mittels einer Saugplatte SP festgehalten, deren Ansaugkraft im Vergleich zu der auf den Beleg ausgeübten Transportkraft etwas geringer ist, damit der Beleg beim Ein- und Ausfahren in Transportrichtung bewegbar ist. Sobald der Beleg B seine Halteposition erreicht hat, klappen die am unteren Rand der Saugplatte SP vorgesehenen Antriebsrollen AR des Horizontalantriebs (siehe Fig. 2) nach unten weg und gleichzeitig schwenkt die Saugplatte SP zusammen mit dem Beleg B in die strichpunktiert gezeichnete Stellung schräg nach vorne. Durch das Verschwenken der Saugplatte SP kommt der zunächst senkrecht stehende Beleg in eine für den Betrachter ergonomisch wesentlich günstigere Lage, so daß der Betrachter bei gleicher Kopfneigung sowohl das Datensichtgerät DS als auch die Belegsichtstation BS optisch erfassen kann.

Einzelheiten der Belegsichtstation BS sind in einer Seitenansicht in Fig. 2 dargestellt. Diese Fig. 2 zeigt die Saugplatte SP einschließlich Beleg B in Transportposition und — in strichpunktierten Linien — in der für den Betrachter günstigen Position. Die horizontale Drehachse DR ist im Bereich des oberen Randes der Saugplatte SP vorgesehen. An der Rückseite der Saugplatte SP befindet sich ein Lüfter L, der die Luft durch Saugbohrungen ansaugt, so daß sich der Beleg an der Saugplatte anschmiegt. Am unteren Rand der Saugplatte SP sind an der Vorderseite Antriebsrollen AR für den Horizontalantrieb des Beleges und an der Rückseite zugehörige Gegenrollen GR vorgesehen. Beim Vorschwenken der Saugplatte SP werden die Antriebsrollen AR gleichzeitig nach unten geklappt, wobei für den Schwenk- bzw. Klappvorgang ein gemeinsamer Antrieb z. B. der in der Fig. 2 dargestellte Kurbeltrieb KT vorgesehen ist. Durch das Wegklappen der Antriebsrollen AR liegt der Beleg B in der für den Betrachter wichtigen Schwenkposition völlig frei, so daß alle Bereiche des Beleges ungehindert betrachtet werden können.

## Patentansprüche

1. Belegverarbeitungseinrichtung, bei der im Transportkanal zwischen einer Eingabestation und einer oder mehreren Ablagestationen im nach einer Lesestation liegenden Streckenbereich eine Korrekturstation vorgesehen ist, die aus einer Tastatur, einem darüber angeordneten Datensichtgerät und einer im zwischen Tastatur und Datensichtgerät verlaufenden Transportkanal vorgesehenen Belegsichtstation besteht, dadurch gekennzeichnet, daß die Belegsichtstation (BS) aus einer in der vertikalen Belegebene angeordneten Saugplatte (SP) besteht, die über eine horizontale Drehachse aus der Vertikalposition in eine bezogen auf die gemeinsame Blickrichtung zum Datensichtgerät (DS) und zur Belegsichtstation (BS) ergonomisch günstige, schräg nach vorne abfallende Sichtposition schwenkbar und nach Beendigung der Korrektur wieder in ihre ursprüngliche Vertikalposition zurückschwenkbar ist..

2. Belegverarbeitungseinrichtung nach Anspruch 1, dadurch gekennzeichnet, daß in der Belegsichtstation (BS) am unteren Rand der Saugplatte (SP) Antriebsrollen (AR) für den Horizontalantrieb des Beleges (B) vorgesehen sind, die beim Vorschwenken der Saugplatte (SP) nach unten wegklappbar sind.

3. Belegverarbeitungseinrichtung nach Anspruch 2, dadurch gekennzeichnet, daß die Antriebssysteme für die Schwenkung der Saugplatte (SP) und für das Wegklappen der Antriebsrollen (AR) miteinander gekoppelt sind.

4. Belegverarbeitungseinrichtung nach Anspruch 3, dadurch gekennzeichnet, daß das gemeinsame Antriebssystem als Kurbeltrieb ausgebildet ist.

### Claims

1. A document processing device wherein, in the transportation channel between an input station and one or more depositing stations, that part of the line which follows a reading station contains a correction station which consists of a keyboard, a data viewing device arranged above the keyboard and a document viewing station which is located in the transportation channel which extends between the keyboard and the data viewing device, characterised in that the document viewing station (BS) consists of a suction plate (SP) which is arranged in the vertical document plane and which can be pivoted about a horizontal axis of rotation out of the vertical position into a forwardly sloping viewing position which is ergonomically favourable in relation to the common viewing direction to the data viewing device (DS) and the document viewing station (BS) and which, on completion of the correction, can be pivoted back into its original vertical position.

2. A document processing device as claimed in claim 1, characterised in that in the document viewing station (BS) at the lower edge of the suction plate (SP) drive rollers (AR) are provided to drive the document (B) horizontally and which can be folded downwards when the suction plate (SP) is pivoted forwards.

3. A document processing device as claimed in claim 2, characterised in that the drive systems for the pivoting of the suction plate (SP) and for the folding away of the drive rollers (AR) are coupled to one another.

4. A document processing device as claimed in claim 3, characterised in that the common drive system consists of a crank gear.

### Revendications

1. Dispositif de traitement de documents, comprenant un poste de correction dans le canal de transport entre un poste d'entrée et un ou plusieurs postes de réception, dans le tronçon de parcours faisant suite à un poste de lecture, poste de correction qui est composé d'un clavier, d'un visuel placé au-dessus de lui et d'un poste d'examen de documents, prévu dans le canal de transport s'étendant entre le clavier et le visuel, caractérisé en ce que le poste d'examen de documents (BS) est constitué d'une plaque aspirante (SP), disposée dans le plan vertical par lequel passent les documents, qui peut être basculée sur un axe de rotation horizontal de la position verticale à une position d'examen, où elle est inclinée de bas en haut depuis l'avant et qui est ergonomiquement avantageuse car permettant la même direction du regard pour observer le visuel (DS) et le poste d'examen de documents (BS), et qui peut être ramenée à sa position verticale de départ après la fin de la correction.

2. Dispositif selon la revendication 1, caractérisé en ce que le poste d'examen de documents (BS) comporte des galets d'entraînement (AR) prévus pour le déplacement horizontal des documents (B) sur le bord inférieur de la plaque aspirante (SP) et qui sont écartés par rabattement vers le bas lorsque la plaque aspirante (SP) est basculée vers l'avant.

3. Dispositif selon la revendication 2, caractérisé en ce que les commandes pour le basculement de la plaque aspirante (SP) et pour le rabattement des galets de commande (AR) sont accouplées entre elles.

4. Dispositif selon la revendication 3, caractérisé en ce que les commandes sont réunies en un système unique sous forme d'un mécanisme à manivelle.

# FIG 1

# FIG 2